# EUROPEAN PATENT APPLICATION

(11) **EP 4 461 981 A1**
(43) Date of publication of application: **13.11.2024**
(21) Application number: 23172127.5
(22) Date of filing: 08.05.2023
(51) Int. Cl.: F16C 19/38, F16C 33/58, F16C 33/60, F16C 19/56, F16C 33/66

(54) **THREE-ROW ROLLER BEARING, PREFERABLY FOR USE IN A WIND POWER PLANT**

(71) Applicant: Defontaine SAS, 85530 La Brufflère (FR); thyssenkrupp AG, 45143 Essen (DE)
(72) Inventor: Jacquemont, Eric, 44190 Clisson (FR); Deudé, Olivier, 44192 Clisson (FR); Habary, Laurent, 85600 Montaigu Vendee (FR); Guerin, Bertrand, 49660 Sevemoine (FR)
(74) Representative: thyssenkrupp Intellectual Property GmbH

(57) **Abstract**

The present invention relates to a three-row roller bearing (100), preferably for use in a wind power plant (200), with an outer ring (1) and a two-piece inner ring (2, 3), the outer ring (1) and the inner ring (2, 3) being rotatable relative to each other about an axis of rotation (A),
wherein the bearing (100) has a hub side (1a) via which the bearing (100) can be connected to a hub, and a rotor blade side (3c) via which the bearing (100) can be connected to a rotor blade (7),
wherein the inner ring (2, 3) comprises a rotor blade side inner ring (3), a hub side inner ring (2) and an internal bearing gear (2a),
wherein the rotor blade side inner ring (3) comprises the internal bearing gear (2a).

## Description

### Prior art

The present invention relates to a three-row roller bearing with an outer ring and a two-piece inner ring, the outer ring and the inner ring being rotatable relative to each other about an axis of rotation.

Such bearings are widely used in wind power plants in so-called pitch systems. A pitch system of a wind turbine controls the power of the turbine via the position of the rotor blades in relation to the wind by enabling rotation of the rotor blades about a pitch axis. The efficiency of the turbine is thus optimized based on the prevailing wind conditions. In addition, the pitch system can be seen as part of the brake system that helps prevent failures in the bearing or the entire power plant. Therefore, three-row roller bearings play a vital role in realizing the functionalities of the pitch system and maintaining safety.

However, the use of three-row roller bearings implies also risks, since the bearing comprises three separate rings - one outer and two inner rings - that are prone to sliding relative to each other, especially in case of a pitch system with an internal gear where forces are being transmitted or due to forces induced by radial rollers. Such bearing designs can result in displacements and deformities due to forces transmitted through meshing gears and therefore create lubrication problems due to a loss of lubricant. Furthermore, sliding of the rings can damage the raceway system (crushed roller cages), the bolted joints and also affect the gear mesh. The driving pinion shaft of the pitch system is usually designed as short as possible in order to reduce its flexion under the prevailing loads. Thus, the bearing gear is usually arranged close to the hub of the wind turbine and consequently rather away from the rotor blades. However, arranging the bearing gear close to the hub necessitates a bearing design that can worsen lubrication problems. Lubrication holes are usually formed in a contact area between the two inner rings or at least partially through a contact area. When the inner rings move and deform under load the integrity of lubrication holes is endangered and leakage can be caused.

### Disclosure of the invention

It is an object of the present invention to provide an improved three-row roller bearing that can be used in a wind power plant, especially one that addresses the above-mentioned leakage disadvantages in the prior art.

The object of the present invention is achieved by a three-row roller bearing, preferably for use in a wind power plant, with an outer ring and a two-piece inner ring, the outer ring and the inner ring being rotatable relative to each other about an axis of rotation,
wherein the bearing has a hub side via which the bearing an be connected to a hub, and a rotor blade side via which the bearing can be connected to a rotor blade,
wherein the inner ring comprises a rotor blade side inner ring, a hub side inner ring and an internal bearing gear,
wherein the rotor blade side inner ring comprises the internal bearing gear.

By implementing such a bearing design, in which the internal bearing gear is not formed in the hub side inner ring but in the rotor blade side inner ring, lubrication problems can be reduced since lubrication holes do not need to be formed through the contact area between the two inner rings. In case of high loads on the bearing, even under deformation, the integrity of the lubrication holes is maintained and leakage therefore is avoided.

The internal bearing gear is driven by a driving pinion, both the bearing gear and the pinion gear being preferably formed as spur gears so as to reduce costs by implementing a geometry that is easier and therefore cheaper to manufacture. Furthermore, the two inner rings in combination can be formed as a C shape. Preferably, the opening of the C shape is directed outwards, facing the outer ring. The volume in the C shape can receive axial and radial rollers.

According to a preferred embodiment of the system, two rows of axial rollers and a row of radial rollers are arranged between the outer ring and the inner ring, the axial rollers and the radial rollers being movable around the axis of rotation, wherein the one row of radial rollers is arranged between the two rows axial rollers. The radial rollers can be loaded perpendicularly to the axis of rotation, whereas the axial rollers can be loaded parallel to the axis of rotation. Preferably, the radial rollers are arranged in the middle of the two rows of axial rollers, hereby creating a symmetric arrangement. A symmetric arrangement results in an improved load distribution within the bearing.

According to a preferred embodiment of the system, the rotor blade side inner ring and the hub side inner ring physically abut to each other via a contact area. The hub side inner ring and the rotor blade side inner ring can each comprise a lateral surface facing and physically in touch with each other. Moreover, the lateral surfaces of the two rings are arranged, preferably, flush with each other. Preferably, the lateral surfaces of the two inner rings have the same size as the contact area. It is also conceivable that the lateral surfaces are greater than the contact area. Also, the lateral surface of the hub side inner ring can be larger or smaller than the lateral surface of the rotor blade side inner ring. They can also be equal. Furthermore, the contact area can be cylinder-shaped and comprise recesses. Along with inner ring recesses formed in the two inner rings, the recesses can be used for mounting purposes, especially for inserting assembly bolts, tapered and/or threaded pins in order to firmly connect the two inner rings with a rotor blade. Moreover, the radial rollers are preferably arranged in a plane that is arranged at a closer distance to the rotor blade side of the bearing than the contact area. In other words, the contact area is preferably arranged at a closer distance to the hub side of the bearing than the radial rollers.

According to a preferred embodiment of the system, the bearing comprises a lubrication hole that is formed only in the rotor blade side inner ring. Preferably, the bearing comprises a plurality of lubrication holes along a circumferential direction of the three-row roller bearing. The number of lubrication holes can be even or odd. Furthermore, the lubrication holes can be distributed evenly around the circumference of the bearing or unevenly. The one or the many lubrication holes can be formed linearly or comprise a curvature. Moreover, the lubrication holes can comprise a multitude of sections, wherein an individual angle is formed between adjacent sections.

Preferably, the lubrication hole extends in the radial and the axial direction of the rotor blade side inner ring. Preferably, the lubrication hole is formed at least partially perpendicular to the contact area. A lubrication hole that is formed at least partially perpendicular to the contact area can comprise at least three sections. Preferably, the three sections are formed perpendicularly to each other. Such a design can be advantageous because an inlet and an outlet of the lubrication hole can be formed at different positions along the axis of rotation, rendering the injection and evacuation of a lubricant simple and flexible for an operator.

According to a preferred embodiment of the system, the lubrication hole has an opening in the rotor blade side inner ring for injecting and/or evacuating a lubricant, the opening facing away from the outer ring. Conventionally, the rollers of the three-row roller bearing of a wind power plant can be easily accessed for lubrication purposes from within the hub. An opening facing inwards, away from the outer ring, therefore facilitates the access with a lubricant and reduces risks as opposed to an opening that can only be accessed from outside of the wind power plant.

According to a preferred embodiment of the system, the contact area and a lateral surface of the bearing gear are arranged parallel to each other, the contact area and the lateral surface being preferably offset. A bearing design, wherein the contact area and the lateral surface are offset allows for fine turning of the contact area for a good contact between the two inner rings while the lateral surface of the bearing gear may be machined more economically.

According to another preferred embodiment of the system, the hub side inner ring comprises a chamfer facing away from the outer ring. The chamfer can be formed advantageously on the hub side of the hub side inner ring and simplify the mounting process due to an enlargement of an internal cross section of the inner ring. Especially when introducing the driving pinion through the internal cross section, the enlargement can prove favorable to avoid contact between the pinion and the bearing and consequently also scratches as well as other mechanical damages that can promote bearing failure in future operation.

According to a preferred embodiment of the system, parallel to the axis of rotation the rotor blade side inner ring is wider than the hub side inner ring. The two inner rings can have in a direction perpendicular to the axis of rotation, at least widely, the same dimensions. However, in a direction parallel to the axis of rotation, the rotor blade side inner ring can have greater dimensions than the hub side inner ring. In other words, the rotor blade side inner ring can have a greater volume or require more space than the hub side inner ring. A greater volume of the rotor blade side inner ring can be advantageous, since in a greater volume a greater number of lubrication holes can be formed. Also, a volume that is sufficiently large can accommodate easilier an internal bearing gear. The internal bearing gear can have longer teeth which can be advantageous since the forces transmitted from the driving pinion can be distributed more uniformly.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

- Figure 1: illustrates schematically a three-row roller bearing in a wind power plant according to the state of the art in a first section view.
- Figure 2: illustrates schematically the three-row roller bearing from figure 1 in a second section view.
- Figure 3: illustrates schematically a three-row roller bearing in a wind power plant according to the invention in a first section view.
- Figure 4: illustrates schematically the three-row roller bearing from figure 3 in a second section view.

### Embodiments of the invention

The present invention will be described with respect to particular embodiments and with reference to certain drawings but the invention is not limited thereto but only by the claims. The drawings described are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described 20 herein are capable of operation in other sequences than described of illustrated herein.

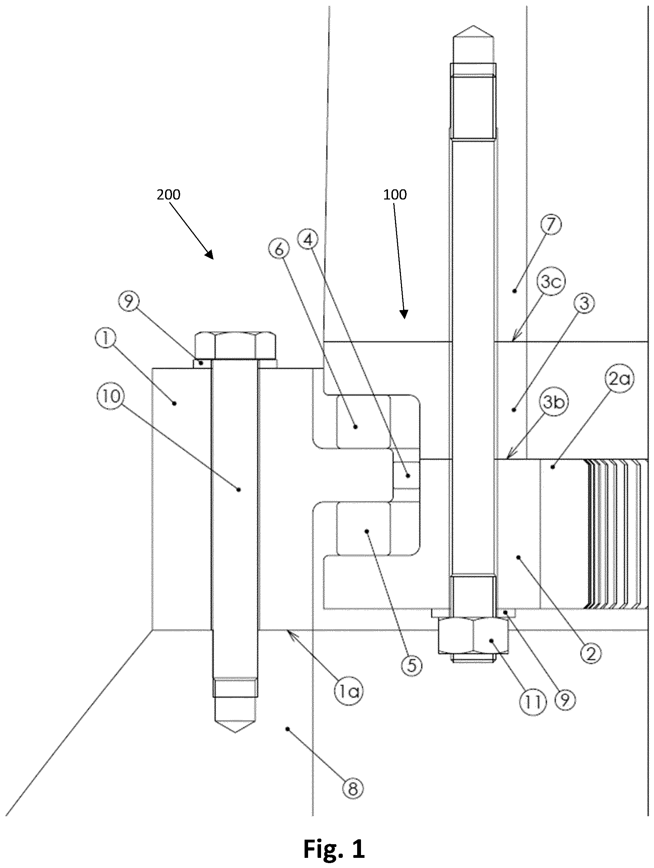

In **Figure 1****,** a three-row roller bearing 100 in a wind power plant 200 according to the state of the art is illustrated schematically in a first section view. The wind power plant comprises the bearing 100 and furthermore a rotor blade 7 and a hub 8. The bearing 100 enables controlling the rotation of the rotor blade 7 about a pitch axis that is not shown in figure 1.

The bearing 100 has an outer ring 1 and a two-piece inner ring 2, 3 that comprises a hub side inner ring 2 and a rotor blade side inner ring 3. The outer ring 1 and the inner ring 2, 3 are rotatable relative to each other about an axis of rotation that is not shown in figure 1. The axis of rotation substantially extends parallel to a driving pinion shaft 13a.

Furthermore, the bearing 100 has a hub side 1a via which the bearing 100, more precisely the outer ring 1, is connected to the hub 8. Moreover, the bearing 100 has a rotor blade side 3c via which the bearing 100, more precisely the inner ring 2, 3, is connected to the rotor blade 7. The connections may be realized by bolting, e.g. by means of a first bolt 10, two washers 9, a threaded pin 12 that comprises a male thread at either of its two ends and a nut 11.

Also, the hub side inner ring 2 comprises an internal bearing gear 2a. A driving pinion 13 can drive the internal bearing gear 2a. Eventually, due to the firm connection between the hub side inner ring 2, the rotor blade side inner ring 3 and the rotor blade 7, driving the internal bearing gear 2a results in driving of the rotor blade 7, hereby causing the rotation of the rotor blade 7 around the pitch axis. Said rotation around the pitch axis can be induced in case wind conditions change, especially in case the vectorial wind velocity (direction and magnitude) changes.

The three-row roller bearing 100 comprises two rows of axial rollers 5, 6, each row 5 and 6 being rotatable around the axis of rotation. The axial rollers 5, 6 can absorb forces parallel to the axis of rotation. Furthermore, the bearing 100 comprises a row of radial rollers 4 that is arranged between the outer ring 1 and the inner ring 2, 3. The radial rollers 4 are arranged between the two rows axial rollers 5, 6 and absorb forces perpendicular to the axis of rotation.

Between the rotor blade side inner ring 3 and the hub side inner ring 2 a contact area 3b is formed. The two inner rings 2, 3 abut physically to each other by means of the contact area 3b. The radial rollers 4 are arranged at a closer distance to the hub 8 than the contact area 3b.

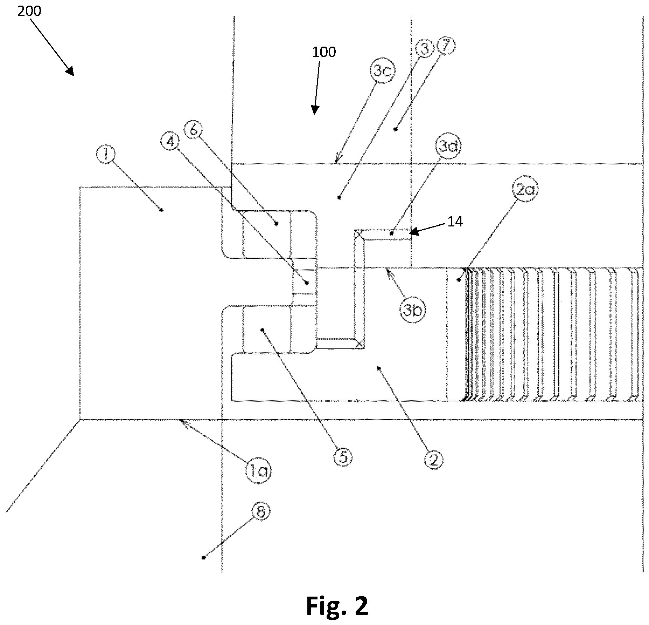

**Figure 2** illustrates schematically the three-row roller bearing 100 from figure 1 in a second section view. According to state of the art three-row roller bearings 100 that are used in wind power plants 200, lubrication holes 3d can be formed along a circumferential direction of the bearing 100. In figure 2, one of such lubrication holes 3d is shown. The lubrication hole 3d comprises three sections, adjacent sections being formed perpendicular to each other. Furthermore, the lubrication hole 3d comprises an opening 14 via which a lubricant can be pumped to the axial rollers 5, 6 as well as radial rollers 4. Moreover, lubricant that has become used due to operation can be evacuated from the bearing 100 via the opening 14, for instance by means of a suction device that can be connected to the opening 14.

The middle section of the lubrication hole 3d is formed perpendicularly to the contact area 3b. In other words, the lubrication hole extends not only through one single inner ring but through both inner rings 2, 3. In case the two inner rings 2, 3 are moved or deformed relatively to each other, leakage of the lubricant can come about which is one of the major disadvantages in the state of the art bearing designs.

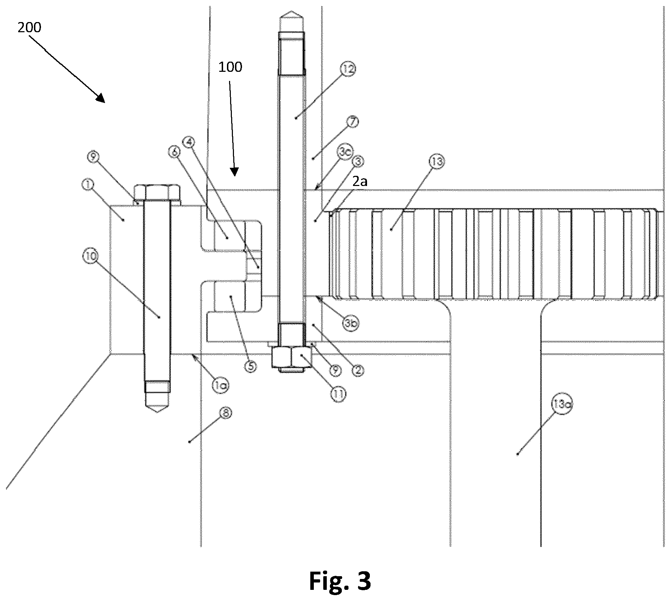

**Figure 3** illustrates schematically a three-row roller bearing 100 in a wind power plant 200 according to the invention in a first section view. According to the invention and as opposed to the prior art, the rotor blade side inner ring 3 comprises the internal bearing gear 2a. In order to reduce the surface pressure on the toothing surfaces a rather large axial extent of the internal bearing gear 2a is preferable. In particular, the axial extent of the internal bearing gear 2a is preferably at least 30 %, more preferably at least 40 % of the axial extent of the inner ring 2, 3.

Preferably, the contact area 3b is formed closer to the hub 8 that the radial rollers 4. Furthermore, in the direction of the axis of rotation or an axis of the driving pinion shaft 13a, the rotor blade side inner ring 3 is preferably wider than the hub side inner ring 2. In other words, the rotor blade side inner ring 3 has a larger volume in order to receive lubrication holes 3d.

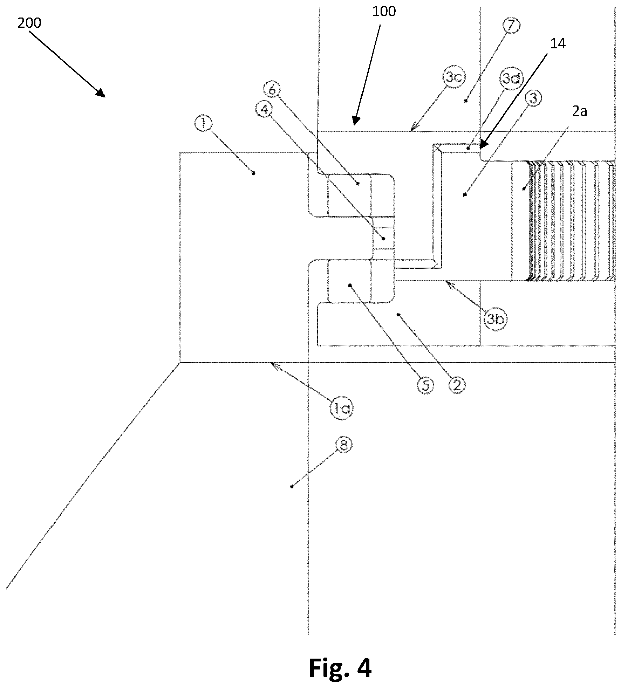

**Figure 4** illustrates schematically the three-row roller bearing 100 from figure 3 in a second section view, wherein one lubrication hole 3d can be seen. As opposed to the prior art, the lubrication hole 3d does not extend through both inner rings 2 and 3, but is formed solely in the rotor blade side inner ring 3. Consequently, none of the sections of the lubrication hole 3d interacts with the contact area 3b. Such an optimized bearing design helps avoiding or at least reducing leakage of lubricant.

### Reference signs

- 1: Outer ring
- 1a: Hub side
- 2: Hub side inner ring
- 2a: Internal bearing gear
- 3: Rotor blade side inner ring
- 3b: Contact area
- 3c: Rotor blade side
- 3d: Lubrication hole
- 4: Radial rollers
- 5, 6: Axial rollers
- 7: Rotor blade
- 8: Hub
- 9: Washer

- 10: First bolt
- 11: Nut
- 12: Threaded pin
- 13: Driving pinion
- 13a: Driving pinion shaft
- 14: Opening of the lubrication hole

- 100: Three row roller bearing
- 200: Wind power plant

## Claims

1. Three-row roller bearing (100), preferably for use in a wind power plant (200), with an outer ring (1) and a two-piece inner ring (2, 3), the outer ring (1) and the inner ring (2, 3) being rotatable relative to each other about an axis of rotation (A),
wherein the bearing (100) has a hub side (1a) via which the bearing (100) can be connected to a hub, and a rotor blade side (3c) via which the bearing (100) can be connected to a rotor blade (7),
wherein the inner ring (2, 3) comprises a rotor blade side inner ring (3), a hub side inner ring (2) and an internal bearing gear (2a),
wherein the rotor blade side inner ring (3) comprises the internal bearing gear (2a).

2. Three-row roller bearing (100) according to claim 1, wherein two rows of axial rollers (5, 6) and a row of radial rollers (4) are arranged between the outer ring (1) and the inner ring (2, 3), the axial rollers (5, 6) and the radial rollers (4) being movable around the axis of rotation (A), wherein the one row of radial rollers (4) is arranged between the two rows axial rollers (5, 6).

3. Three-row roller bearing (100) according to claim 1 or 2, wherein the rotor blade side inner ring (3) and the hub side inner ring (2) physically abut to each other via a contact area (3b).

4. Three-row roller bearing (100) according to one of the preceding claims, wherein the bearing (1) comprises a lubrication hole (3d) that is formed only in the rotor blade side inner ring (3).

5. Three-row roller bearing (100) according to claim 4, wherein the lubrication hole extends in the radial and the axial direction of the rotor blade side inner ring (3).

6. Three-row roller bearing (100) according to claim 4 or 5, wherein the lubrication hole (3d) is formed at least partially perpendicular to the contact area (3b).

7. Three-row roller bearing (100) according to one of the claims 4 to 6, wherein the lubrication hole (3d) has an opening (14) in the rotor blade side inner ring (3) for injecting and/or evacuating a lubricant, the opening (14) facing away from the outer ring (1).

8. Three-row roller bearing (100) according to one of the claims 3 to 7, wherein the contact area (3b) and a lateral surface of the bearing gear (2a) are arranged parallel to each other, the contact area (3b) and the lateral surface being preferably offset.

9. Three-row roller bearing (100) according to one of the preceding claims, wherein the hub side inner ring (2) comprises a chamfer facing away from the outer ring (1).

10. Three-row roller bearing (100) according to one of the preceding claims, wherein parallel to the axis of rotation (A) the rotor blade side inner ring (3) is wider than the hub side inner ring (2).
